# FASCICULE DE BREVET EUROPEEN

(11) **EP 0 669 470 B1**
(45) Date de publication et mention de la délivrance du brevet: **22.04.1998**
(21) Numéro de dépôt: 94402888.5
(22) Date de dépôt: 14.12.1994
(51) Int. Cl.: F16B 2/24, H02G 3/10

(54) **Attache universelle en particulier pour la fixation d'un équipement électrique**
Universelle Halterung, insbesondere für die Befestigung einer elektrischen Ausrüstung
Universal holding device, in particular for the fastening of electrical equipment

(30) Priorité: 31.01.1994 FR 9401028
(43) Date de publication de la demande: 30.08.1995
(73) Titulaire: RAPID S.A., F-75017 Paris (FR)
(72) Inventeur: Leon, Jean-Pierre, F-78800 Houilles (FR)
(74) Mandataire: Durand, Yves Armand Louis

(56) Documents cités:
- FR-A- 1 428 487
- GB-A- 833 125

## Description

La présente invention a essentiellement pour objet une attache universelle en particulier pour la fixation d'un équipement électrique sur une structure quelconque telle que par exemple un profilé (GB-A-833 125).

On connaît déjà depuis longtemps des attaches constituées par une pièce unique élastiquement déformable qui peut donc être pincée sur une partie saillante appartenant à une structure quelconque et constituée par exemple par la tranche d'un profilé.

Toutefois, les profilés pouvant avoir des formes très différentes, comme on le sait, il fallait donc disposer d'autant de formes d'attache que de formes de profilés. Autrement dit, il fallait disposer d'une forme spéciale d'attache adaptée à chaque profilé pour qu'elle puisse coopérer avec lui, ce qui par conséquent, multipliait le nombre et les formes des attaches.

La présente invention a pour but notamment de remédier à cet inconvénient en proposant une attache universelle qui peut se fixer par clippage et pinçage sur un élément de structure ou de profilé quelconque.

A cet effet, l'invention a pour objet une attache universelle en particulier pour la fixation d'un équipement électrique sur une structure quelconque telle que par exemple un profilé, et du type constituant une pièce unique élastiquement déformable et présentant la forme générale d'un U dont l'une des branches ou première branche, plus longue que l'autre branche ou deuxième branche, comporte une extrémité repliée vers l'intérieur du U pour former une pince avec la deuxième branche, caractérisée en ce que ladite extrémité repliée de la première branche est fendue suivant une direction orthogonale à la base du U de l'attache et est repliée de part et d'autre de la fente, en direction de la première branche, pour former une concavité à parois élastiques et apte à recevoir un élément de la structure inséré dans l'attache et comprimé dans ladite concavité par au moins une languette découpée dans la deuxième branche de l'attache.

Suivant une autre caractéristique préférée de cette attache, les bords de l'extrémité repliée de la première branche comportent des griffes découpées dans ces bords et faisant saillie vers l'intérieur du U.

Selon encore une autre caractéristique préférée de cette attache, les bords de la deuxième branche du U comportent des pattes découpées repliées vers l'intérieur du U et dont les extrémités libres sont recourbées vers l'extérieur du U.

L'attache de l'invention peut être encore caractérisée par le fait que dans l'embase du U et/ou à la racine des branches du U, sont pratiquées des ouvertures pour le passage d'une lanière, d'un collier ou analogue permettant la fixation de câbles par exemple.

On précisera encore ici que l'embase du U comporte des petites languettes découpées rabattues vers l'intérieur du U et susceptibles de former des butées vis-à-vis de l'élément de la structure inséré dans l'attache.

Suivant une autre caractéristique préférée de l'attache selon cette invention, sur les deux côtés de la première branche du U, est découpée au moins une languette qui est rabattue vers l'extrémité repliée de la première branche et qui forme une butée pour cette extrémité repliée.

L'attache selon l'invention peut être encore caractérisée en ce que la première branche du U est munie d'un orifice apte à recevoir une vis quart de tour, et en ce que l'extrémité repliée de la première branche comporte en bout des dents résultant d'un repliage de matière vers l'intérieur du U.

On comprend donc déjà que les divers découpages et repliements particuliers de l'attache en U selon cette invention lui confèrent une pluralité de moyens de fixation par clippage, de sorte que cette attache peut immédiatement s'adapter et être convenablement fixée sur des formes quelconques de profilé.

Mais d'autres avantages de l'invention apparaîtront mieux dans la description détaillée qui suit et se réfère aux dessins annexés, donnés uniquement à titre d'exemple, et dans lesquels.

La figure 1 est une vue en perspective d'une attache conforme à cette invention.

La figure 2 est une vue en élévation et de côté de cette attache.

La figure 3 est une vue en élévation, suivant la flèche III de la figure 2.

La figure 4 est une vue extérieure et en élévation de l'autre branche de l'attache, suivant la flèche IV de la figure 2.

La figure 5 est une vue partielle en perspective de l'attache, suivant la flèche V de la figure 2, et illustrant plus particulièrement l'extrémité repliée de l'une des branches de l'attache.

La figure 6 est une vue de côté de l'attache en position clippée sur le bord d'un chemin de câbles en U constitué d'un treillis de fils métalliques.

Les figures 7 et 8 sont des vues similaires à la figure 6, mais montrant l'attache fixée sur un chemin de câbles constitué par des profilés en U ayant des formes différentes, lesdits profilés étant représentés suivant une demi-vue, de même que le chemin de câbles en treillis visible sur la figure 6.

Les figures 9 et 10 sont des vues similaires aux figures 6 à 8 et illustrent l'attache en position clippée sur des profilés plans ayant des épaisseurs différentes.

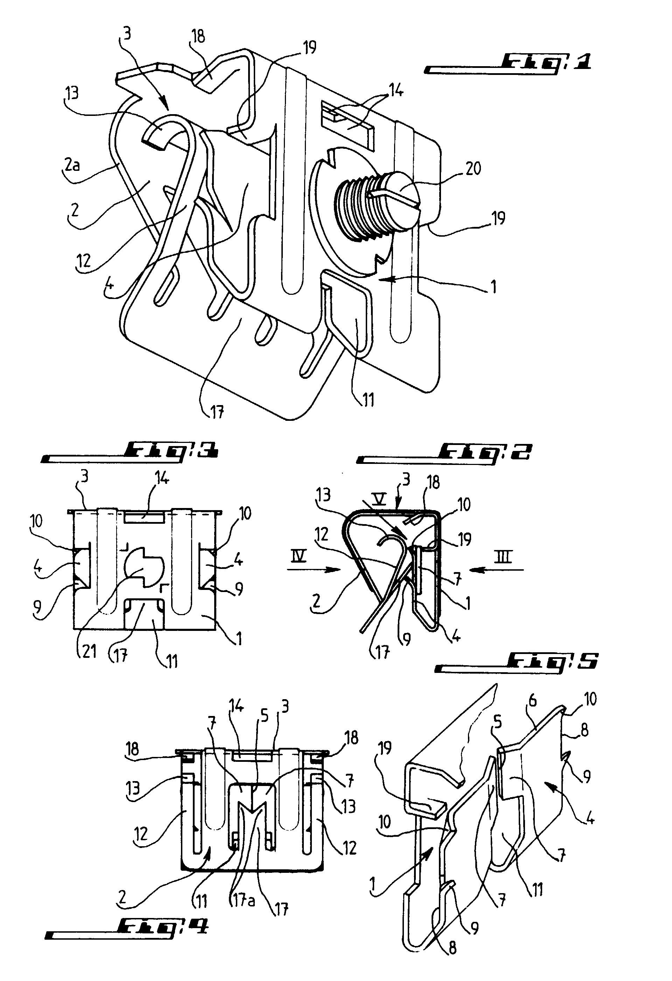

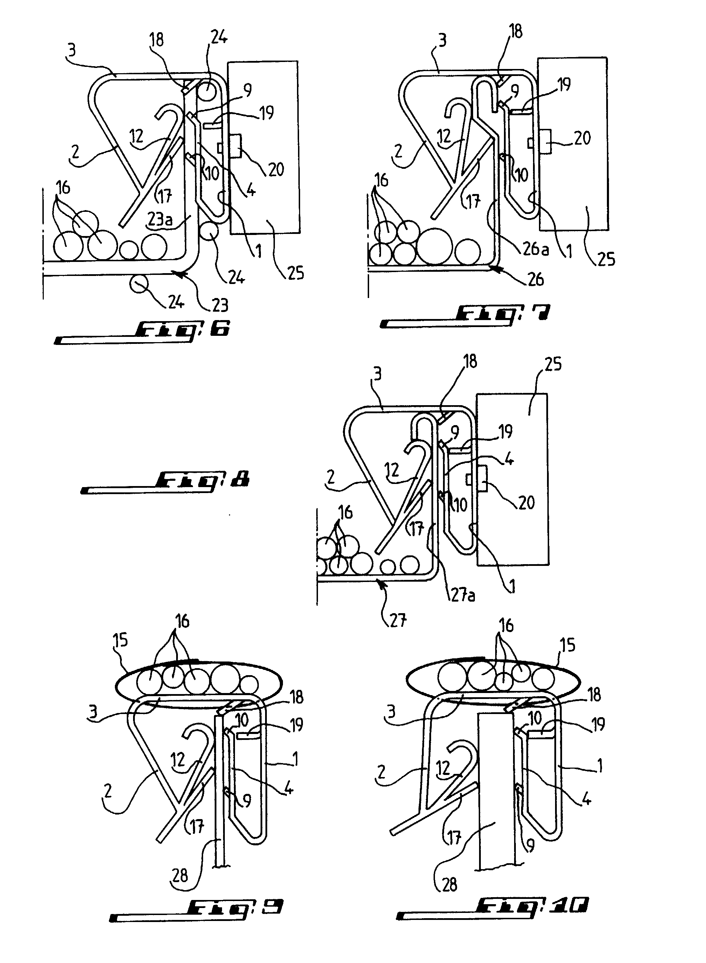

Suivant un exemple de réalisation, et en se reportant plus particulièrement aux figures 1 à 5, une attache conforme à cette invention forme une pièce unique élastiquement déformable et présentant la forme générale d'un U à deux branches 1, 2 raccordées à une embase 3, la branche 1, ou première branche, étant plus longue que l'autre branche, ou deuxième branche 2, de façon à comporter une extrémité 4 repliée vers l'intérieur du U pour s'étendre sensiblement parallèlement à la première branche 1 et former ainsi une pince avec la deuxième branche 2.

Ainsi, l'attache pourra être fixée par clippage sur un élément de structure quelconque et tel que par exemple un profilé comme on le décrira plus loin en se reportant aux figures 6 à 10.

L'extrémité repliée 4 de la première branche 1 comporte, comme on le voit bien sur les figures 4 et 5, une fente 5 qui s'étend suivant une direction orthogonale à la base 3 du U de l'attache. Cette fente 5 s'étend jusqu'au bord d'extrémité libre 6 de l'extrémité repliée 4 de la première branche 1.

L'extrémité repliée 4 comporte, de part et d'autre de la fente 5 des parties 7 repliées en direction de la première branche 1 et définissant une concavité à parois élastiques et apte à recevoir un élément de la structure inséré dans l'attache entre l'extrémité repliée 4 et la branche 2, comme on le décrira en détail plus loin, référence faite à la figure 6.

L'extrémité repliée 4 de la première branche 1 comporte encore sur ses bords opposés 8 des griffes 9 découpées dans ces bords et faisant saillie vers l'intérieur du U, c'est-à-dire plus précisément vers la deuxième branche 2.

Enfin, l'extrémité repliée 4 comporte en bout des dents 10 résultant d'un repliage de matière vers la deuxième branche 2, comme pour les griffes susmentionnées 9.

On a montré en 11 une ouverture pratiquée au niveau du raccordement de la première branche 1 à l'extrémité repliée 4, cette ouverture conférant une certaine élasticité à ces deux éléments, la fente 5 débouchant dans cette ouverture.

Comme on le voit bien sur les figures 1, 2 et 4, la deuxième branche 2 de l'attache comporte des pattes 12 découpées dans les bords 2a de la branche 2, repliées vers l'intérieur du U, et dont les extrémités libres 13 sont recourbées, à la manière d'une crosse, vers l'extérieur du U.

On a montré en 14, sur les figures 1, 3 et 4 des ouvertures pratiquées dans l'embase 3 du U de l'attache, et également dans la racine des branches 1 et 2 du U, ces ouvertures permettant le passage d'une lanière ou d'un collier repéré en 15 sur les figures 9 et 10 afin de permettre la fixation de câbles électriques 16 par exemple.

En plus des pattes découpées 12, la branche 2 de l'attache comporte une languette 17 découpée dans ladite branche, infléchie vers l'intérieur du U, au-delà des pattes 12, comme le voit bien sur les figures, et se terminant par des griffes 17a.

L'embase 3 comporte encore des petites languettes 18 découpées et rabattues vers l'intérieur du U. Ces petites languettes sont susceptibles de constituer des butées vis-à-vis du bord libre de profilé inséré dans l'attache.

On a montré en 19 d'autres petites languettes découpées sur les côtés opposés de la première branche 1 et qui sont repliées en direction de l'extrémité repliée 4 de cette branche. Ces languettes 19 constitueront avantageusement une butée pour l'extrémité repliée 4 lors de l'insertion du profilé ou de l'élément de structure, de façon qu'un espace soit toujours ménagé entre ladite extrémité repliée 4 et la première branche 1.

Ceci est en effet nécessaire par le fait que la première branche 1 est munie d'une vis quart de tour 20 bien visible sur la figure 1 et pouvant coopérer avec un orifice 21 ménagé dans ladite branche et bien visible sur la figure 3. La présence de la vis quart de tour 20 exige donc, pour son montage, qu'un espace soit prévu entre l'extrémité repliée 4 et la branche 1 de l'attache. Cette vis permettra avantageusement la fixation par exemple d'une boîte de connexion électrique sur l'attache de l'invention elle-même fixée par clippage sur un élément de structure ou un profilé.

Mais, pour une meilleure compréhension de l'invention, on se reportera maintenant aux figures 6 à 10 illustrant une telle fixation sur des éléments de structure à configurations diverses.

Sur la figure 6, on voit un chemin de câbles constitué par un treillis de fils métalliques en U 23 réunis entre eux par des fils métalliques longitudinaux 24.

Dans ce cas, la branche 23a d'un U est pincée entre les deux parois élastiques 7 de part et d'autre de la fente 5 de l'extrémité repliée 4, et la languette élastique 17 appartenant à la branche 2.

Ainsi, des câbles 16 peuvent être disposés à l'intérieur du chemin de câbles en forme de gouttière, tandis qu'un boîtier de connexion électrique 25 pourra être fixé par la vis 20 sur la branche 1 de l'attache.

En se reportant aux figures 7 et 8, on voit que l'attache est ici fixée sur des chemins de câbles constitués par des profilés en U 26, 27 dont les bords libres des ailes ont des configurations différentes.

Dans ce cas là, la branche 26a, 27a du U est pincée d'une part entre les griffes 9 et les dents 10 de l'extrémité repliée 4 de la branche 1, et, d'autre part, la languette 17 et les pattes 12 de la branche 2.

Sur les figures 9 et 10, on voit que l'attache est fixée sur un profilé plan ou sur l'aile plane d'un profilé en H par exemple.

Là encore, comme précédemment, le profilé est pincé entre les griffes 9 et les dents 10 d'une part, et la languette 17 ainsi que les pattes 12 d'autre part. Ici, les petites languettes 18 découpées dans l'embase 3 de l'attache servent de butée pour le bord libre du profilé qui est repéré en 28, de sorte qu'un espace sera nécessairement laissé entre ce bord libre et la base 3 du U de l'attache pour permettre le passage du collier 15 réunissant les câbles électriques 16 qui sont ainsi rendus solidaires de l'attache elle-même fixée par clippage sur le profilé.

On a donc réalisé suivant l'invention une attache universelle pouvant être fixée sur des profilés ou éléments de structure ayant des formes très diverses et même autres que les formes représentées, et cela grâce à un agencement, une découpe et un repliement particulier des divers éléments constituant l'attache et lui conférant l'universalité recherchée.

Bien entendu, l'invention n'est nullement limitée au mode de réalisation décrit et illustré qui n'a été donné qu'à titre d'exemple.

## Revendications

1. Attache universelle en particulier pour la fixation d'un équipement électrique sur une structure quelconque telle que par exemple un profilé, et du type constituant une pièce unique élastiquement déformable et présentant la forme générale d'un U dont l'une des branches ou première branche (1), plus longue que l'autre branche ou deuxième branche (2), comporte une extrémité (4) repliée vers l'intérieur du U pour former une pince avec la deuxième branche (2), caractérisée en ce que ladite extrémité repliée (4) de la première branche (1) est fendue suivant une direction orthogonale à la base (3) du U de l'attache et est repliée de part et d'autre de la fente (5), en direction de la première branche (1), pour former une concavité à parois élastiques (7) et apte à recevoir un élément (23a) de la structure inséré dans l'attache et comprimé dans la concavité par au moins une languette (17) découpée dans la deuxième branche (2) de l'attache.

2. Attache selon la revendication 1, caractérisée en ce que les bords (8) de l'extrémité repliée (4) de la première branche (1) comportent des griffes (9) découpées dans ces bords et faisant saillie vers l'intérieur du U.

3. Attache selon la revendication 1 ou 2, caractérisée en ce que les bords (2a) de la deuxième branche (2) du U comportent des pattes découpées (12) repliées vers l'intérieur du U et dont les extrémités libres (13) sont recourbées vers l'extérieur du U.

4. Attache selon l'une des revendications 1 à 3, caractérisée en ce que dans l'embase (3) du U et/ou à la racine des branches (1, 2) du U, sont pratiquées des ouvertures (14), pour le passage d'une lanière d'un collier ou analogue (15) permettant la fixation de câbles (16).

5. Attache selon l'une des revendications 1 à 4, caractérisée en ce que l'embase (3) du U comporte des petites languettes découpées (18) rabattues vers l'intérieur du U et susceptibles de former des butées vis-à-vis de l'élément de structure (28) inséré dans l'attache.

6. Attache selon l'une des revendications précédentes, caractérisée en ce que sur les deux côtés de la première branche (1) du U, est découpée au moins une languette (19) qui est rabattue vers l'extrémité repliée (4) de la première branche (1) et qui forme une butée pour cette extrémité repliée.

7. Attache selon l'une des revendications précédentes, caractérisée en ce que la première branche précitée (1) est munie d'un orifice (21) apte à recevoir une vis quart de tour (20), et en ce que l'extrémité repliée précitée (4) comporte en bout des dents (10) résultant d'un repliage de matière vers l'intérieur du U.

## Patentansprüche

1. Vielzweck-Befestigungsklemme insbesondere für die Befestigung einer elektrischen Ausrüstung an irgendwelchem Aufbau, wie z.B. einem Profil und der ein einziges elastisch verformbares Stück und die allgemeine Gestalt eines U's bildenden Gattung, dessen einer der Schenkel bzw. erster Schenkel (1) länger als der andere Schenkel bzw. zweite Schenkel (2) ist, ein nach Innen des U's umgebogenes Ende (4) aufweist, um eine Klemme mit dem zweiten Schenkel (2) zu bilden, dadurch gekennzeichnet, dass das besagte umgebogene Ende (4) des ersten Schenkels (1) entlang einer zum Steg (3) des U's der Befestigungsklemme geschlitzt ist und beiderseits des Schlitzes (5) in der Richtung zu dem ersten Schenkel (1) hin umgebogen ist, um eine Austiefung mit elastischen Wänden (7) zu bilden, die geeignet ist, ein Element (23a) des Aufbaus aufzunehmen, das in die Befestigungsklemme eingeführt und in der Austiefung durch wenigstens eine in dem zweiten Schenkel (2) der Befestigungsklemme ausgeschnittene Zunge (17) zusammengedrückt wird.

2. Befestigungsklemme nach Anspruch 1, dadurch gekennzeichnet, dass die Ränder (8) des umgebogenen Endes (4) des ersten Schenkels (1) in diesen Rändern ausgeschnittene und nach Innen des U's vorspringende Klauen (9) aufweisen.

3. Befestigungsklemme nach Anspruch 1 oder 2, dadurch gekennzeichnet, dass die Ränder (2a) des zweiten Schenkels (2) des U's ausgeschnittene, nach Innnen des U's umgebogene Ansatzlappen (12), deren freien Enden (13) nach Aussen des U's umgebogen sind, aufweisen.

4. Befestigungsklemme nach einem der Ansprüche 1 bis 3, dadurch gekennzeichnet, dass in dem Steg (3) des U's und/oder an der Wurzel der Schenkel (1,2) des U's Öffnungen (14) für den Durchgang eines Streifens einer die Befestigung von Kabeln (16) gestattenden Schelle oder dergleichen (15) gebildet sind.

5. Befestigungsklemme nach einem der Ansprüche 1 bis 4, dadurch gekennzeichnet, dass der Steg (3) des U's ausgeschnittene nach Innen des U's umgefaltene und zur Bildung von Anschlägen gegenüber des in die Befestigungsklemme eingefügten Aufbauelementes (28) geeignete Züngchen (18) aufweist.

6. Befestigungsklemme nach einem der vorangehenden Ansprüche, dadurch gekennzeichnet, dass in den beiden Seiten des ersten Schenkels (1) wenigstens ein Züngchen (19) ausgeschnitten ist, das zum umgebogenen Ende (4) hin des ersten Schenkels (1) umgebogen ist und das einen Anschlag für dieses umgebogene Ende bildet.

7. Befestigungsklemme nach einem der vorangehenden Ansprüche, dadurch gekennzeichnet, dass der vorgenannte erste Schenkel (1) mit einer zur Aufnahme einer Vierteldrehungsschraube (20) geeigneten Öffnung (21) versehen ist und dass das vorgenannte umgebogene Ende (4) am Ende sich aus einer Werkstoffumbiegung nach Innen des U's ergebende Zähne (10) aufweist.

## Claims

1. Universal clamp in particular for the fastening of an electric equipment onto any structure whatsoever such for example as a sectional bar and of the type constituting one single elastically deformable part exhibiting the general shape of a U of which one of the legs or first leg (1) longer than the other leg or second leg (2) comprises an end (4) bent inwards of the U to form a clip with the second leg (2), characterized in that the said bent end (4) of the first leg (1) is split in a direction orthogonal to the base (3) of the U of the clamp and is folded back on either side of the slot (5) towards the first leg (1) to form a concavity with elastic walls (7) and adapted to receive an element (23a) of the structure inserted into the clamp and compressed within the concavity by at least one tongue (17) cut out in the second leg (2) of the clamp.

2. Clamp according to claim 1, characterized in that the edges (8) of the bent end (4) of the first leg (1) comprise claws (9) cut out in these edges and projecting towards the inside of the U.

3. Clamp according to claim 1 or 2, characterized in that the edges (2a) of the second leg (2) of the U comprise cut-out lugs (12) bent towards the inside of the U and the freen ends (13) thereof are curved outwards of the U.

4. Clamp according to one of claims 1 to 3, characterized in that in the base (3) and/or at the root of the legs (1, 2) of the U are formed apertures (14) for the passage of a strap of a collar or the like (15) permitting the fastening of cables (16).

5. Clamp according to one of claims 1 to 4, characterized in that the base (3) of the U comprises small cut-out tabs (18) folded back towards the inside of the U and capable of forming stops with respect to the structure element (28) inserted into the clamp.

6. Clamp according to one of the foregoing claims, characterized in that on both sides of the first leg (1) of the U is cut-out at least one tab (19) which is folded back towards the bent end (4) of the first leg (1) and which forms a stop for this bent end.

7. Clamp according to one of the foregoing claims, characterized in that the aforesaid first leg (1) is provided with an opening (21) adapted to receive a quarter turn screw (20) and in that the aforesaid bent end (4) endwise comprises teeth (10) resulting from a bending of the material inwards of the U.
